# EUROPEAN PATENT APPLICATION

(11) **EP 4 520 993 A1**
(43) Date of publication of application: **12.03.2025**
(21) Application number: 24197874.1
(22) Date of filing: 02.09.2024
(51) Int. Cl.: F16D 59/00, F16D 127/00

(54) **SPEED CONTROL DEVICE AND VEHICLE**

(30) Priority: 11.09.2023 JP 2023147038; 17.07.2024 JP 2024113947
(71) Applicant: Nabtesco Corporation, Tokyo 102-0093 (JP); Acro Nainen Co., Ltd., Wakayama-shi, Wakayama 641-0036 (JP)
(72) Inventor: Nishida, Yuhei, Chiyoda-ku, Tokyo, 102-0093 (JP); Sumikura, Hiroki, Chiyoda-ku, Tokyo, 102-0093 (JP); Katsumoto, Satoshi, Wakayama-shi, Wakayama, 641-0036 (JP)
(74) Representative: Grünecker Patent- und Rechtsanwälte PartG mbB

(57) **Abstract**

A speed control device (1, 201, 250) according to the invention includes: a brake drum (11); a brake shoe (23) for reducing the rotation speed of the vehicle wheel (103) by a braking force produced by contact with an inner circumference of the brake drum (11); an elastic member (24) configured to bias the brake shoe (23); a contact member (25); a shift cam (26, 226) configured to increase or reduce a force of the contact member (25) pressing the elastic member (24); and an adjustment gear (27) for setting the rotational position of the shift cam (26, 226) to adjust the force pressing the elastic member (24). The outer diameter (D1, D201) of the shift cam (26, 226) is larger than the outer diameter (D2, D202) of the adjustment gear (27).

## Description

### TECHNICAL FIELD

The present invention relates to a speed control device and a vehicle.

### BACKGROUND

For example, a vehicle such as a rollator used to assist a user in walking may be equipped with a speed control device for controlling the rotation speed of a vehicle wheel (see, for example, Patent Literature 1).

The speed control device is installed on a vehicle wheel. The speed control device includes, for example, a brake drum, a brake shoe, an elastic member, a contact member, a cam, and an adjustment gear. The brake shoe contacts the inner circumferential surface of the brake drum. The elastic member biases the brake shoe. The cam applies a force in the compressive direction to the elastic member via the contact member. The adjustment gear sets the position of the cam in the rotational direction to adjust the force with which the contact member presses the elastic member.

### RELEVANT REFERENCE

### LIST OF RELEVANT PATENT LITERATURE

Patent Literature 1: Japanese Patent Application Publication No. 2022-59838

### SUMMARY

A larger adjustment range of braking force is being considered for the speed control device. If the adjustment range of the braking force can be larger, it is possible, for example, to apply the braking force during high speed traveling. However, in the structure of conventional speed control devices, it was difficult to enlarge the adjustment range of braking force.

One aspect of the present invention provides a speed control device and a vehicle capable of enlarging the adjustment range of braking force.

A speed control device according to one aspect of the invention is a speed control device provided on a vehicle wheel rotating around a rotation axis so as to control rotation speed of the vehicle wheel, the speed control device comprising: a brake drum; a brake shoe for reducing the rotation speed of the vehicle wheel by a braking force produced by contact with an inner circumference of the brake drum; an elastic member having one end and another end, the elastic member being configured to bias the brake shoe via the one end; a contact member provided on the other end of the elastic member; a shift cam provided so as to be rotatable around the rotation axis and configured to increase or reduce a force of the contact member pressing the elastic member in accordance with a rotational position of the shift cam; and an adjustment gear operated by an external input to rotate the shift cam, so as to set the rotational position of the shift cam to adjust the force pressing the elastic member. The shift cam has a larger diameter than the adjustment gear.

In the speed control device, the outer diameter of the shift cam is larger than the outer diameter of the adjustment gear, allowing for a larger adjustment range of the braking force. This also allows for a greater degree of freedom in setting the braking force. Thus, for example, the braking force can be set such that it is applied during traveling at a higher speed than it was before.

The speed control device may further comprise a cover plate covering at least the shift cam. The cover plate may have at least one window formed therein for indicating the rotational position of the shift cam. In this case, the window can indicate the braking force of the centrifugal brake so that it can be grasped easily. Therefore, works such as setting of the rotation speed of the vehicle wheel on which the centrifugal brake is activated can be easily performed.

In the speed control device, the at least one window may comprise a plurality of windows. The plurality of windows may be located at different positions along a rotational direction of the shift cam, and a number of windows overlapping the shift cam may change in accordance with the rotational position of the shift cam. In this case, it is possible to indicate the braking force of the centrifugal brake so that it can be grasped more easily.

In the speed control device, the shift cam may have a position indicator for indicating the rotational position of the shift cam. The at least one window may be formed such that the position indicator is visible. In this case, it is possible to indicate the braking force of the centrifugal brake so that it can be grasped more easily.

A vehicle according to one aspect of the invention comprises: the speed control device described above; and a vehicle wheel having the speed control device provided thereon. Since the vehicle is equipped with the speed control device, the adjustment range of the braking force can be larger. This allows for a greater degree of freedom in setting the braking force.

### ADVANTAGEOUS EFFECTS

One aspect of the present invention makes is possible to enlarge the adjustment range of braking force.

### BRIEF DESCRIPTION OF THE DRAWINGS

Fig. 1 is a schematic diagram of a rollator, or a vehicle according to an embodiment.
Fig. 2 is an exploded perspective view of a speed control device and a vehicle wheel according to a first embodiment.
Fig. 3 is a plan view of a centrifugal brake unit shown in Fig. 2.
Fig. 4 is a plan view of the cover plate shown in Fig. 2.
Fig. 5 is a plan view of a part of a speed control device according to the first embodiment.
Fig. 6 is a plan view of a part of the speed control device according to the first embodiment.
Fig. 7 is a plan view of a part of the speed control device according to the first embodiment.
Fig. 8 is a plan view of a part of the speed control device according to the first embodiment.
Fig. 9 is a plan view of a part of a speed control device according to a second embodiment.
Fig. 10 is a plan view of a part of the speed control device according to the second embodiment.
Fig. 11 is a plan view of a part of the speed control device according to the second embodiment.
Fig. 12 is a plan view of a part of the speed control device according to the second embodiment.
Fig. 13 is a plan view of a part of the speed control device according to the second embodiment.
Fig. 14 is a plan view showing a part of a shift cam of the speed control device according to the second embodiment.
Fig. 15 is an exploded perspective view showing a variation of the speed control device and the vehicle wheel according to the embodiment.
Fig. 16 is a six-sided view of the vehicle wheel shown in Fig. 15.
Fig. 17 is a perspective view of the vehicle wheel shown in Fig. 15.

### DESCRIPTION OF THE PREFERRED EMBODIMENTS

A speed control device according to the embodiments of the present invention will be hereinafter described in detail with reference to the drawings.

### <Vehicle>

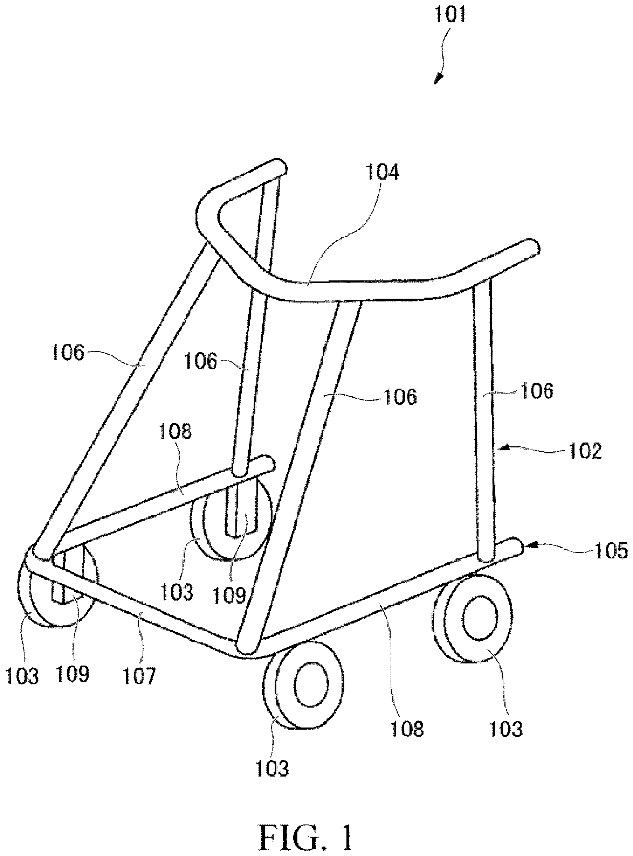

Fig. 1 is a schematic diagram of a rollator 101, or a vehicle according to an embodiment. The rollator 101 is used, for example, to assist a user in walking. For this embodiment, the vertical direction is defined as it is when the rollator 101 is used. The front direction is defined as the traveling direction of the rollator 101 being used, and the rear direction is defined as the opposite to the traveling direction. Further, the vehicle width direction of the rollator 101 is defined as the direction orthogonal to the vertical direction and the front-rear direction.

The rollator 101 includes a body 102, a plurality of vehicle wheels 103, and a handling portion 104. The body 102 includes a lower frame 105 and a plurality of vertical frames 106. The lower frame 105 includes a front frame 107 and two side frames 108. The side frames 108 extend rearward from the ends of the front frame 107. The plurality of vertical frames 106 extend upward from the front and rear of the side frames 108. The vehicle wheels 103 are located at the front and rear of the side frames 108. The handling portion 104 is U-shaped. The handling portion 104 is connected to the upper ends of the vertical frames 106.

The rollator 101 travels as the user pushes the handling portion 104 with his or her hand. For this embodiment, the rollator 101 is an example of the vehicle. However, the vehicle is not limited to a rollator, but can also be, for example, a cart for transporting luggage or a buggy for carrying an infant.

### First Embodiment

### <Speed Control Device>

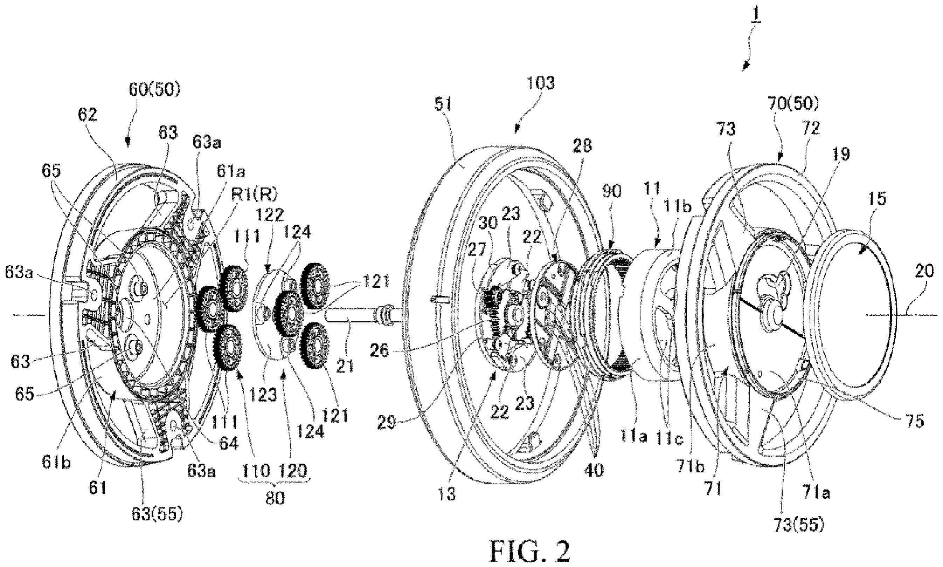

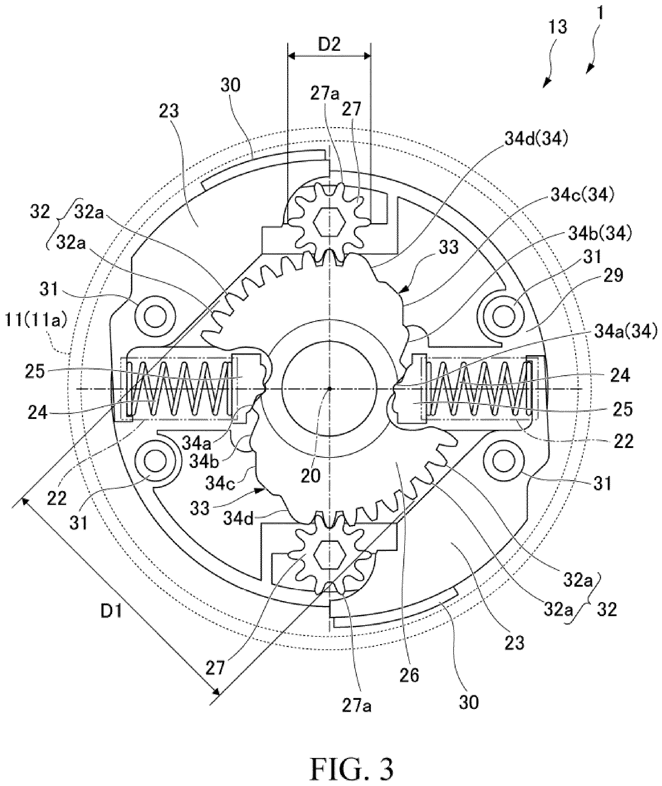

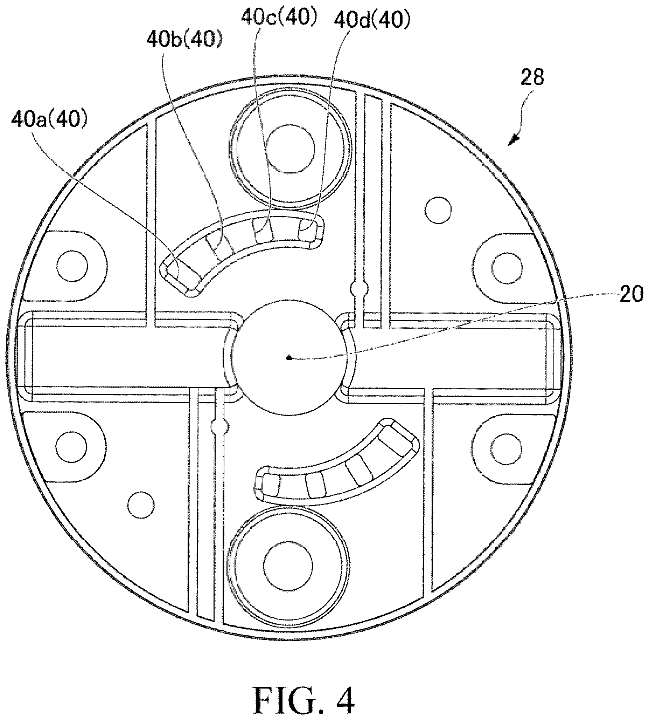

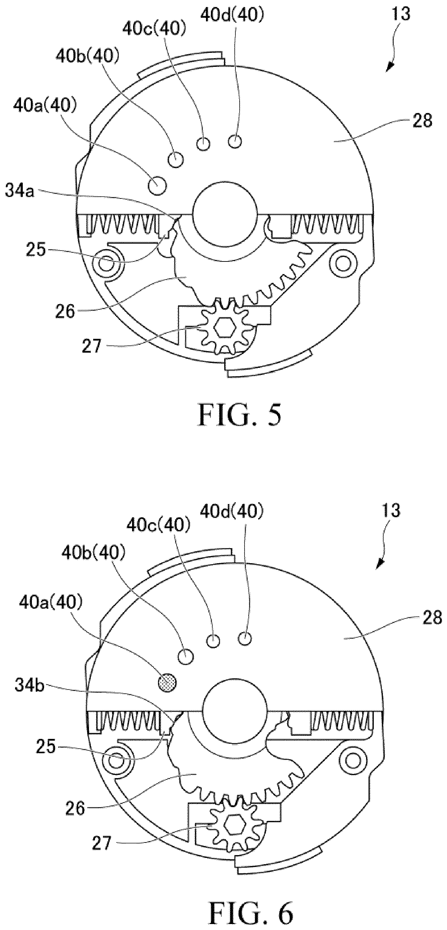

Fig. 2 is an exploded perspective view of a speed control device 1 and a vehicle wheel 103 according to a first embodiment. Fig. 3 is a plan view showing a centrifugal brake unit 13 included in the speed control device 1. Fig. 4 is a plan view showing a cover plate 28 included in the speed control device 1. Figs. 5 to 8 are plan views each showing a part of the speed control device 1.

As shown in Fig. 1, the vehicle wheels 103 are mounted on brackets 109 provided at the lower portions of the front and rear of the side frames 108. The vehicle wheels 103 are thus secured to the body 102 via the brackets 109. The plurality of vehicle wheels 103 provided on the body 102 are configured in the same manner. Therefore, only one of the vehicle wheels 103 will be hereinafter described, and the other vehicle wheels 103 will not be described.

As shown in Figs. 1 and 2, the vehicle wheel 103 includes an axle 21 supported by the bracket 109, a disc-shaped wheel 50 rotatably supported by the axle 21, and a tire 51 mounted on the outer circumference of the wheel 50. The axle 21 protrudes from the bracket 109 toward the outside in the vehicle width direction. The axle 21 is positioned so that the axial direction of the axle 21 coincides with the vehicle width direction. The central axis that extends through the center of the axle 21 in the vehicle width direction is the rotation axis 20. Thus, the vehicle wheel 103 rotates around the rotation axis 20. In a view along the rotation axis 20, the directions intersecting the rotation axis 20 are defined as the radial directions, and the direction circling around the rotation axis 20 is defined as the circumferential direction.

The wheel 50 includes a first wheel plate 60 and a second wheel plate 70 that overlap in the axial direction of the axle 21. The first wheel plate 60 and the second wheel plate 70 have a disc-like outer shape and are rotatably supported by the axle 21.

The first wheel plate 60 is located closer to the bracket 109 than is the second wheel plate 70. The first wheel plate 60 includes a first housing portion 61 having a bottomed cylindrical shape and opening toward the second wheel plate 70, a first rim 62 having a cylindrical shape and positioned to surround the first housing portion 61 externally in the radial direction, and a plurality of first spokes 63 connecting the first housing portion 61 and the first rim 62 in the radial direction.

The first housing portion 61 includes a first bottom wall 61a having a disc-like shape and a first circumferential wall 61b that protrudes from the outer edge of the first bottom wall 61a toward the second wheel plate 70 and extends all along the outer edge of the first bottom wall 61a. The inner space of the first housing portion 61 serves as a first housing space R1, which is open toward the second wheel plate 70. The first bottom wall 61a includes a bearing housing 64 that houses a bearing (not shown). The bearing housing 64 is positioned coaxially with the rotation axis 20 and formed cylindrically to protrude inward in the vehicle width direction. The first wheel plate 60 is thus rotatably supported by the axle 21 via the bearing housed in the bearing housing 64.

In addition, the first bottom wall 61a has a plurality of first planetary support pins 65 integrally formed thereon. In the example shown, three first planetary support pins 65 are formed at regular intervals in the circumferential direction around the rotation axis 20. The first planetary support pins 65 are formed to protrude from the first bottom wall 61a toward the second wheel plate 70. The first planetary support pins 65 constitute a part of the speed control device 1.

Three first spokes 63 are formed at regular intervals in the circumferential direction around the rotation axis 20. The first spokes 63 are formed to extend radially outward from the outer circumference of the first circumferential wall 61b and is connected to the inner circumference of the first rim 62. The first spokes 63 are formed so that their circumferential width along the circumferential direction is gradually smaller toward the radially outward direction. The number and shape of the first spokes 63 are not limited to these, but may be changed as needed. The first spokes 63 each have a bolt insertion hole 63a that extends through the first spokes 63 in the vehicle width direction.

The second wheel plate 70 includes a second housing portion 71 having a bottomed cylindrical shape and opening toward the first wheel plate 60, a second rim 72 having a cylindrical shape and positioned to surround the second housing portion 71 externally in the radial direction, and a plurality of second spokes 73 connecting the second housing portion 71 and the second rim 72 in the radial direction.

The second housing portion 71 includes a second bottom wall 71a having a disc-like shape and a second circumferential wall 71b that protrudes from the outer edge of the second bottom wall 71a toward the first wheel plate 60 and extends all along the outer edge of the second bottom wall 71a. The inner space of the second housing portion 71 serves as a second housing space (not shown), which is open toward the first wheel plate 60.

In addition, the second bottom wall 71a has an opening 19 that extends through the second bottom wall 71a in the vehicle width direction. The opening 19 serves as a viewing window for externally viewing a window 40 of the cover plate 28, which will be described later. In addition, the second bottom wall 71a has a cover mounting portion 75 integrally formed thereon. The cover mounting portion 75 has a cylindrical shape and protrudes outward in the vehicle width direction. Thus, the opening 19 is positioned inside the cover mounting portion 75.

The second housing portion 71, configured as described above, is formed in a bottomed cylindrical shape having the same outer diameter as the first housing portion 61. The second housing portion 71 is opposed to the first housing portion 61 from the outside in the vehicle width direction.

Three second spokes 73 are formed at regular intervals in the circumferential direction around the rotation axis 20. The second spokes 73 are formed to extend radially outward from the outer circumference of the second circumferential wall 71b and is connected to the inner circumference of the second rim 72. The second spokes 73 are formed so that their circumferential width along the circumferential direction is gradually smaller toward the radially outward direction. In particular, the second spokes 73 are formed in the same number, shape, size, etc. as the first spokes 63, and are opposed to the first spokes 63 from the outside in the vehicle width direction.

The second spokes 73 each have a bolt hole (threaded hole) (not shown) that is open toward the inside in the vehicle width direction. The bolt holes are opposed in the vehicle width direction to the bolt insertion holes 63a formed in the first spokes 63.

The first wheel plate 60 and the second wheel plate 70, configured as described above, coaxially overlap with each other and are fastened together by bolts (not shown). Thus, the first wheel plate 60 and the second wheel plate 70 are integrated together to constitute the wheel 50. The bolts are screwed into the bolt holes from the inside in the vehicle width direction through the bolt insertion holes 63a. In addition, the first wheel plate 60 and the second wheel plate 70 are assembled together so that the opening of the first housing space R1 and the opening of the second housing space overlap with each other. With this arrangement, an inner housing space R is formed inside the wheel 50 by the first housing space R1 and the second housing space. In addition, the first wheel plate 60 and the second wheel plate 70 are assembled together so that the first spokes 63 and the second spokes 73 are assembled together to serve as spokes 55.

The tire 51 is integrally formed to surround the wheel 50 externally in the radial direction, the wheel 50 being constituted by the first wheel plate 60 and the second wheel plate 70 assembled together. Specifically, the tire 51 is assembled to the wheel 50 with its inner circumference in contact with the outer circumference of the wheel 50 (the outer circumference of the first rim 62 in the first wheel plate 60 and the outer circumference of the second rim 72 in the second wheel plate 70) from the outside in the radial direction.

The speed control device 1 is positioned in the inner housing space R of the wheel 50 described above. The speed control device 1 includes a planetary gear mechanism 80, an internal gear 90, a brake drum 11, a centrifugal brake unit 13, and a cap 15.

The planetary gear mechanism 80 has a two-stage configuration and is mainly located in the first housing space R1 of the first wheel plate 60. The planetary gear mechanism 80 includes a first-stage gear mechanism 110 and a second-stage gear mechanism 120. The first-stage gear mechanism 110 is located on the first bottom wall 61a of the first housing portion 61, and the second-stage gear mechanism 120 is located on the outer side of the first-stage gear mechanism 110 in the vehicle width direction.

The first-stage gear mechanism 110 includes a first sun gear (not shown) rotatably supported on the axle 21, and a plurality of first planetary gears 111 arranged around the first sun gear. The first sun gear is formed integrally with a second planetary carrier 122, which will be described later. Three first planetary gears 111 are arranged at regular intervals in the circumferential direction around the rotation axis 20 and are each meshed with the first sun gear. In addition, the first planetary gears 111 are rotatably supported by the first planetary support pins 65 integrally formed on the first bottom wall 61a of the first housing portion 61. Thus, the first bottom wall 61a serves as a planetary carrier that rotatably supports the plurality of first planetary gears 111.

The second-stage gear mechanism 120 includes a second sun gear (not shown) rotatably supported on the axle 21, a plurality of second planetary gears 121 arranged around the second sun gear, and a second planetary carrier 122 that rotatably supports the plurality of second planetary gears 121. The second sun gear is formed integrally with a support plate 29 (described later) included in the centrifugal brake unit 13, and is positioned in line with the first sun gear in the vehicle width direction.

The second planetary carrier 122 includes a disc-shaped carrier plate 123 and second planetary support pins 124 protruding from the carrier plate 123 toward the outside in the vehicle width direction. The carrier plate 123 has the first sun gear formed thereon, protruding toward the inside in the vehicle width direction. Three second planetary support pins 124 are formed at regular intervals in the circumferential direction around the rotation axis 20, so as to correspond to the first planetary support pins 65. The second planetary support pins 124 constitute a part of the speed control device 2. Three second planetary gears 121 are arranged at regular intervals in the circumferential direction around the rotation axis 20 and are each meshed with the second sun gear. In addition, the second planetary gears 121 are rotatably supported by the second planetary support pins 124 formed on the second planetary carrier 122.

The internal gear 90 is formed in a cylindrical shape surrounding the first planetary gears 111 of the first-stage gear mechanism 110 and the second planetary gears 121 of the second-stage gear mechanism 120. The internal gear 90 has internal teeth continuously formed on the entire inner circumference. The internal gear meshes with the first planetary gears 111 and the second planetary gears 121.

The brake drum 11 is positioned on the outer side of the internal gear 90 in the vehicle width direction. The brake drum 11 is formed in a bottomed cylindrical shape including a cylindrical portion 11a and a bottom portion 11b, with the opening facing inward (toward the internal gear 90) in the vehicle width direction. The cylindrical portion 11a of the brake drum 11 surrounds the internal gear 90 externally in the radial direction. The inner circumference of the cylindrical portion 11a is fitted on the outer circumference of the internal gear 90. Thus, the internal gear 90 and the brake drum 11 are assembled together.

A through hole (not shown) is formed in the middle of the bottom portion 11b, to extend through the bottom portion 11b in the vehicle width direction. The through hole is coaxial with the rotation axis 20. In addition, the through hole receives a bush provided on the axle 21 for example, and press-fitted in the through hole. Thus, the brake drum 11 is integrally fixed to the axle 21. Therefore, the internal gear 90 is integrally fixed to the axle 21 via the brake drum 11. In addition, the bottom portion 11b has a plurality of operation windows 11c that extend through the bottom portion 11b in the vehicle width direction. This arrangement allows communication between the outside of the vehicle wheel 103 and the inside of the brake drum 11 through the operation windows 11c and the opening 19 formed in the second wheel plate 70.

The cap 15 is removably attached to the cover mounting portion 75 of the second wheel plate 70. Thus, the cap 15 normally covers the opening 19.

The centrifugal brake unit 13 is positioned on the inner side of the brake drum 11, while being positioned on the outer side of the planetary gear mechanism 80 in the vehicle width direction. Specifically, the centrifugal brake unit 13 is positioned between the second-stage gear mechanism 120 and the bottom portion 11b of the brake drum 11, and is located inside the cylindrical portion 11a of the brake drum 11. The centrifugal brake unit 13 is a mechanism for generating a braking force of the centrifugal brake between the centrifugal brake unit 13 and the brake drum 11. The centrifugal brake unit 13 is rotatable around the rotation axis 20.

As shown in Figs. 3 and 4, the centrifugal brake unit 13 includes two brake shoes 23, two springs 24 (elastic members), two contact members 25, a shift cam 26, two adjustment gears 27, a cover plate 28, and a support plate 29. Fig. 3 does not show the axle 21.

As shown in Fig. 3, each of the brake shoes 23 is shaped like a long plate extending along the circumferential direction around the rotation axis 20. The brake shoe 23 is rotatably supported by the support plate 29 via a rotating shaft 31. The rotating shaft 31 is located at a position off the longitudinally middle portion of the brake shoe 23 toward one end of the brake shoe 23. The one end of the brake shoe 23 is biased by the spring 24 outward in the radial direction of the support plate 29. The two brake shoes 23 are positioned opposite to each other in the radial direction of the support plate 29, with the center of the support plate 29 (rotation axis 20) interposed therebetween.

The brake shoes 23 shown in Fig. 2 and the brake shoes 23 shown in Fig. 3 use different rotating shafts 31 but have the same basic configuration and operation, with only the difference in rotational direction.

Each of the brake shoes 23 has an outer peripheral surface that is curved along its longitudinal direction. A pad 30 is attached to the outer peripheral surface of the other end of the brake shoe 23. The pad 30 is provided on the opposite side to the one end at which the brake shoe 23 is biased by the spring 24, with the rotating shaft 31 positioned between the pad 30 and the one end. When the rotation speed of the vehicle wheel 103 is high, the brake shoe 23 rotates around the rotating shaft 31 to bring the pad 30 into contact with the inner circumference of the cylindrical portion 11a of the brake drum 11. The brake shoe 23 reduces the rotation speed of the vehicle wheel 103 by the braking force produced by contact with the inner circumference of the brake drum 11.

The spring 24 is, for example, a coil spring, having one end and the other end. The spring 24 is provided between the one end of the brake shoe 23 and the contact member 25. The spring 24 extends along the radial direction of the support plate 29. The one end of the spring 24 is in contact with the one end of the brake shoe 23 and biases the one end of the brake shoe 23 outward in the radial direction of the support plate 29. The two springs 24 are positioned opposite to each other in the radial direction of the support plate 29, with the center of the support plate 29 (rotation axis 20) interposed therebetween.

When the rotation speed of the vehicle wheel 103 is below a predetermined value, the spring 24 restricts the contact between the brake drum 11 and the brake shoe 23, resulting in a smaller braking force. When the rotation speed of the vehicle wheel 103 exceeds the predetermined value mentioned above, the spring 24 allows contact between the brake drum 11 and the brake shoe 23, resulting in a larger braking force. The spring 24 is covered by a protective cover 22 attached to the support plate 29. Thus, the spring 24 is protected by the protective cover 22, which prevents dust and other particles from adhering to the spring 24. Fig. 2 shows the protective cover 22 covering the spring 24.

Each of the contact members 25 is provided at the other end of the spring 24 (the part opposite to the one end). The two contact members 25 are positioned opposite to each other in the radial direction of the support plate 29, with the center of the support plate 29 (rotation axis 20) interposed therebetween. The contact members 25 are movable along the direction of expansion and contraction of the spring 24.

The shift cam 26 is mounted to the support plate 29 so as to be rotatable around the rotation axis 20. The shift cam 26 is in direct or indirect contact with the contact members 25. The shift cam 26 increases or reduces the force with which the contact members 25 press the springs 24.

The shift cam 26 has two meshing portions 32 at two locations on its outer edge. The meshing portions 32 have a plurality of teeth 32a. The two meshing portions 32 are positioned opposite to each other in the radial direction of the support plate 29, with the center of the shift cam 26 (rotation axis 20) interposed therebetween.

The shift cam 26 has two cam portions 33 (drive portions) at two locations on its outer edge other than the meshing portions 32. Each of the cam portions 33 has a plurality of engagement steps 34 at different distances from the rotation axis 20. The plurality of engagement steps 34 include a first engagement step 34a, a second engagement step 34b, a third engagement step 34c, and a fourth engagement step 34d. For this embodiment, the first engagement step 34a, the second engagement step 34b, the third engagement step 34c, and the fourth engagement step 34d are collectively referred to as "the engagement steps 34a to 34d".

The second engagement step 34b is formed at a larger distance from the rotation axis 20 than the first engagement step 34a. The third engagement step 34c is formed at a larger distance from the rotation axis 20 than the second engagement step 34b. The fourth engagement step 34d is formed at a larger distance from the rotation axis 20 than the third engagement step 34c. The engagement steps 34a to 34d can engage with the contact member 25.

When the contact member 25 engages with the first engagement step 34a (see Fig. 3), the force of the spring 24 pressing the brake shoe 23 is smallest. Therefore, the brake shoe 23 is allowed to rotate with a relatively small centrifugal force. Therefore, when the rotation speed of the vehicle wheel 103 is relatively low, the brake shoe 23 contacts the inner circumference of the brake drum 11 to exert a braking force.

When the contact member 25 engages with the second engagement step 34b, the force of the spring 24 pressing the brake shoe 23 is slightly larger than when the contact member 25 engages with the first engagement step 34a. Therefore, the brake shoe 23 is allowed to rotate when subjected to a large centrifugal force. Therefore, when the rotation speed of the vehicle wheel 103 is relatively high, the brake shoe 23 contacts the inner circumference of the brake drum 11 to exert a braking force.

When the contact member 25 engages with the third engagement step 34c, the force of the spring 24 pressing the brake shoe 23 is still larger. Therefore, the braking force is exerted when the rotation speed of the vehicle wheel 103 is higher than when the contact member 25 engages with the second engagement step 34b. When the contact member 25 engages with the fourth engagement step 34d, the force of the spring 24 pressing the brake shoe 23 is yet larger. Therefore, the braking force is exerted when the rotation speed of the vehicle wheel 103 is higher than when the contact member 25 engages with the third engagement step 34c.

The engagement steps 34a to 34d are provided along the circumferential direction around the center of the shift cam 26 (rotation axis 20) and are arranged in the circumferential direction in this order. Therefore, the cam portion 33 allows selection from the engagement steps 34a to 34d in accordance with the rotational position of the shift cam 26, thereby increasing or reducing the force pressing the spring 24. The two cam portions 33 are positioned opposite to each other in the radial direction of the support plate 29, with the center of the shift cam 26 (rotation axis 20) interposed therebetween.

Each of the adjustment gears 27 has a plurality of teeth 27a that mesh with the meshing portion 32 of the shift cam 26. The adjustment gear 27 is rotatably supported by the support plate 29. The adjustment gear 27 has an engagement hole that can be engaged with a rotating tool such as a hexagonal wrench. The adjustment gear 27 is capable of transmitting to the cam portion 33 the force input from the outside via the rotating tool engaged in the engagement hole.

Thus, the adjustment gear 27 can rotate the shift cam 26 relative to the support plate 29. The adjustment gear 27 is operated (rotated) by an external input to rotate the shift cam 26, thereby setting the rotational position of the shift cam 26 to adjust the force with which the contact member 25 presses the spring 24. The two adjustment gears 27 are positioned opposite to each other in the radial direction of the support plate 29, with the center of the support plate 29 (rotation axis 20) interposed therebetween.

The shift cam 26 has an outer diameter (shift cam diameter) D1 as the maximum outer diameter. The outer diameter D1 is the outer diameter at the meshing portions 32. The adjustment gears 27 have an outer diameter (adjustment gear diameter) D2 as the maximum outer diameter. The outer diameter D1 of the shift cam 26 is larger than the outer diameter D2 of the adjustment gears 27. Therefore, the formula D1 > D2 holds. The ratio of D1 to D2 (D1/D2) is preferably 3 or larger. If the ratio of D1 to D2 (D1/D2) falls within this range, the adjustment range of the braking force can be larger. The ratio of D1 to D2 (D1/D2) may be, for example, 10 or smaller. If the ratio of D1 to D2 (D1/D2) falls within this range, the size of the shift cam 26 can be reduced. Thus, the size of the speed control device 1 can be reduced.

As shown in Figs. 2 and 4, the cover plate 28 is shaped like a disc and is positioned on the outer side of the support plate 29 in the vehicle width direction. As shown in Figs. 2 and 5, the cover plate 28 covers the entire centrifugal brake unit 13 and is integrally assembled to the support plate 29. Fig. 5 shows only a part of the cover plate 28 in a simplified manner. The same applies to Figs. 6 to 8. The cover plate 28 has a different color than the shift cam 26. For example, the color of the cover plate 28 has a different brightness than that of the shift cam 26. For example, the color of the cover plate 28 is darker than that of the shift cam 26.

As shown in Figs. 4 and 5, the cover plate 28 has a plurality of windows 40. The windows 40 extend through the cover plate 28 in the thickness direction. The plurality of windows 40 include a first window 40a, a second window 40b, a third window 40c, and a fourth window 40d. For this embodiment, the first window 40a, the second window 40b, the third window 40c, and the fourth window 40d are collectively referred to as "the windows 40a to 40d".

The windows 40a to 40d are arranged along the circumferential direction of the support plate 29. Thus, the windows 40a to 40d are located at different positions along the rotational direction of the shift cam 26. In addition, the windows 40a to 40d are arranged in this order along the circumferential direction of the support plate 29 and spaced apart in the circumferential direction of the support plate 29. When the cap 15 is removed, the windows 40a to 40d are visible from the outside through the opening 19 in the second wheel plate 70 and the operation windows 11c in the brake drum 11 (see Fig. 2).

The windows 40a to 40d have a circular shape, for example. The sizes (e.g., inner diameters) of the windows 40a to 40d may be the same or different from each other. The sizes (e.g., inner diameters) of the windows 40a to 40d may be larger or smaller in this order.

Fig. 5 shows that the contact member 25 engages with the first engagement step 34a. In this state, the shift cam 26 is positioned to overlap all of the four windows 40a to 40d. In other words, the shift cam 26 is positioned to encompass all of the four windows 40a to 40d in plan view. Therefore, the shift cam 26 is visible through the four windows 40a to 40d. Since the cover plate 28 has a different color than the shift cam 26, the shift cam 26 is easily visible through the window 40a.

Fig. 6 shows that the adjustment gear 27 is operated to rotate the shift cam 26, such that the contact member 25 engages with the second engagement step 34b. In this state, the shift cam 26 is positioned to overlap three of the four windows 40a to 40d, namely, the windows 40b to 40d. Therefore, the shift cam 26 is visible through the three windows 40b to 40d.

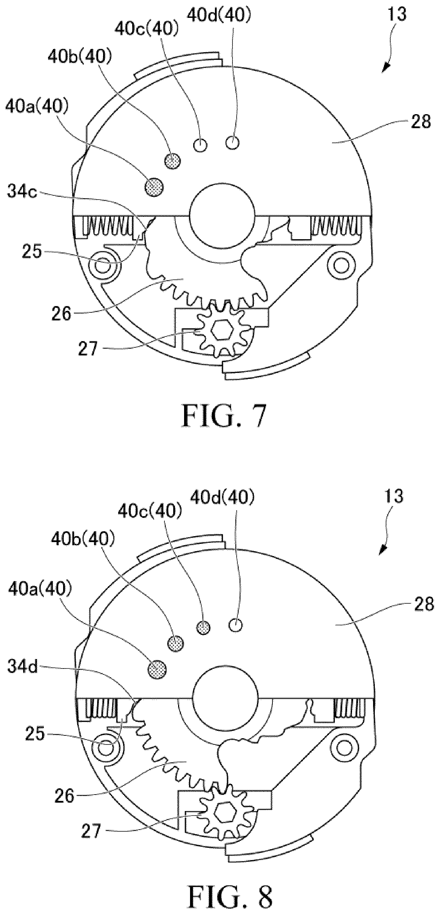

Fig. 7 shows that the adjustment gear 27 is operated to rotate the shift cam 26, such that the contact member 25 engages with the third engagement step 34c. In this state, the shift cam 26 is positioned to overlap two of the four windows 40a to 40d, namely, the windows 40c and 40d. Therefore, the shift cam 26 is visible through the two windows 40c and 40d.

Fig. 8 shows that the adjustment gear 27 is operated to rotate the shift cam 26, such that the contact member 25 engages with the fourth engagement step 34d. In this state, the shift cam 26 is positioned to overlap one of the four windows 40a to 40d, namely, the window 40d. Therefore, the shift cam 26 is visible through the window 40d.

As shown in Figs. 5 to 8, the number of windows 40 through which the shift cam 26 is visible changes depending on the rotational position of the shift cam 26. Thus, the windows 40 can indicate the rotational position of the shift cam 26.

As shown in Fig. 3, the support plate 29 has a circular shape for example, and rotatably supports the brake shoes 23. Further, the support plate 29 rotatably supports the shift cam 26 and the adjustment gears 27. Still further, the support plate 29 has a second sun gear (not shown) formed thereon, which protrudes inward in the vehicle width direction. As mentioned above, the plurality (three) of second planetary gears 121 included in the second-stage gear mechanism 120 mesh with the second sun gear. Thus, as shown in Fig. 2, the two-stage planetary gear mechanism 80 is able to transmit the rotational force of the wheel 50 to the support plate 29.

### Operation of Speed Control Device

A description is given of example operation of the speed control device 1 configured as described above. As shown in Fig. 1, when the handling portion 104 of the rollator 101 is pushed by the user, the vehicle wheels 103 rotate and the rollator 101 moves. As the vehicle wheels 103 rotate, the rotational force is transmitted to the support plate 29 of the centrifugal brake unit 13. Thus, the support plate 29 rotates around the rotation axis 20 of the axle 21 (see Fig. 3).

When the rotation speed of the vehicle wheel 103 is below a predetermined value, the rotation speed of the support plate 29 is also low. Therefore, the brake shoe 23 does not contact the inner circumference of the brake drum 11, and the braking force of the centrifugal brake is kept low. On the other hand, when the rotation speed of the vehicle wheel 103 exceeds the predetermined value, the support plate 29 rotates at a high speed. Therefore, the brake shoe 23 is rotated by the centrifugal force around the rotating shaft 31 against the elastic force of the spring 24, elastically deforming the spring 24 so that the spring 24 is compressed. Thus, the pad 30 of the brake shoe 23 can be pressed against the inner circumference of the brake drum 11. As a result, the braking force of the centrifugal brake can be increased, and the speed of the vehicle wheel 103 can be reduced.

As shown in Fig. 2, in order to change the rotation speed of the vehicle wheel 103 on which the centrifugal brake is activated, the cap 15 is removed from the second wheel plate 70. The adjustment gear 27 shown in Fig. 3 is then rotated using a rotating tool such as a hexagonal wrench. Rotating the shift cam 26 with the adjustment gear 27 allows selection of the engagement step 34 engaged by the contact member 25 from the engagement steps 34a to 34d (see Figs. 5 to 8). Thus, the force with which the contact member 25 presses the spring 24 can be adjusted, and the braking force of the centrifugal brake can be set.

### <Advantageous Effects Produced by Speed Control Device According to Embodiment>

In the speed control device 1, the outer diameter D1 of the shift cam 26 is larger than the outer diameter D2 of the adjustment gears 27, as shown in Fig. 3. Since the outer diameter D1 of the shift cam 26 is larger, the outer edge of the shift cam 26 can be longer. This allows for larger differences between the distances from the rotating axis 20 to the plurality of engagement steps 34 (34a to 34d) of the shift cam 26, thus allowing for a larger adjustment range of the braking force. In addition, the number of engagement steps 34 can be increased, allowing for a greater degree of freedom in setting the braking force. Thus, for example, the braking force can be set such that it is applied during traveling at a higher speed than it was before.

In the speed control device 1, the cover plate 28 has the windows 40 indicating the rotational position of the shift cam 26, making it easy to grasp the braking force of the centrifugal brake. Therefore, works such as setting of the rotation speed of the vehicle wheel 103 on which the centrifugal brake is activated can be easily performed.

In the speed control device 1, the number of windows 40 overlapping the shift cam 26 changes in accordance with the rotational position of the shift cam 26, thus making it easy to grasp the braking force of the centrifugal brake.

Since the rollator 101 is equipped with the speed control device 1, the adjustment range of the braking force can be larger. This allows for a greater degree of freedom in setting the braking force. Thus, for example, the braking force can be set such that it is applied during traveling at a higher speed than it was before.

### Second Embodiment

### <Speed Control Device>

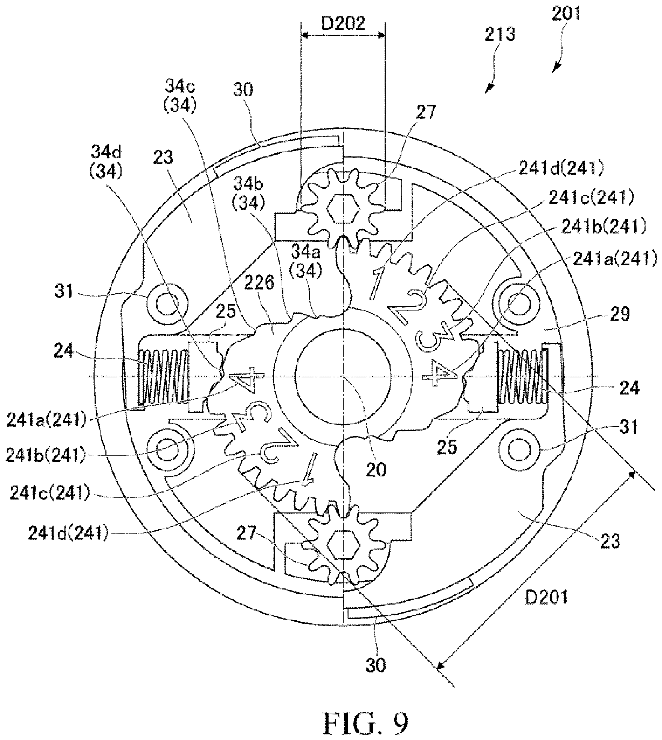

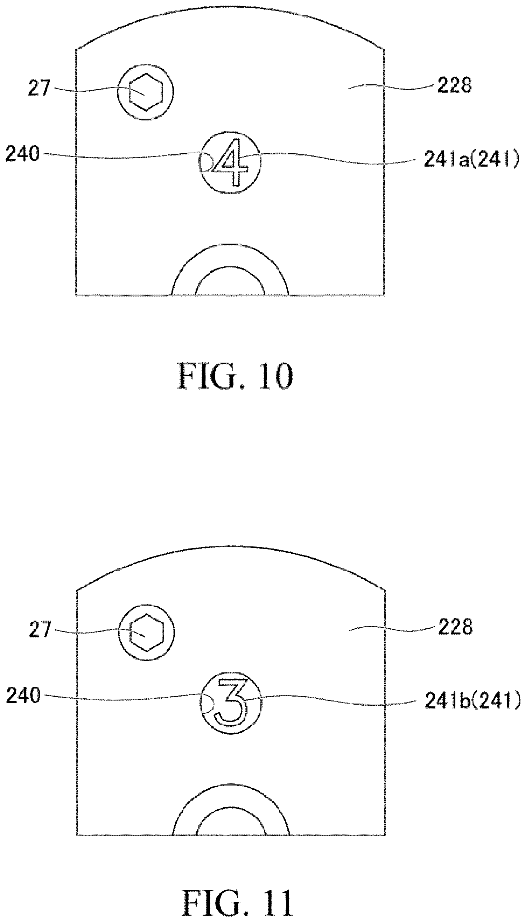

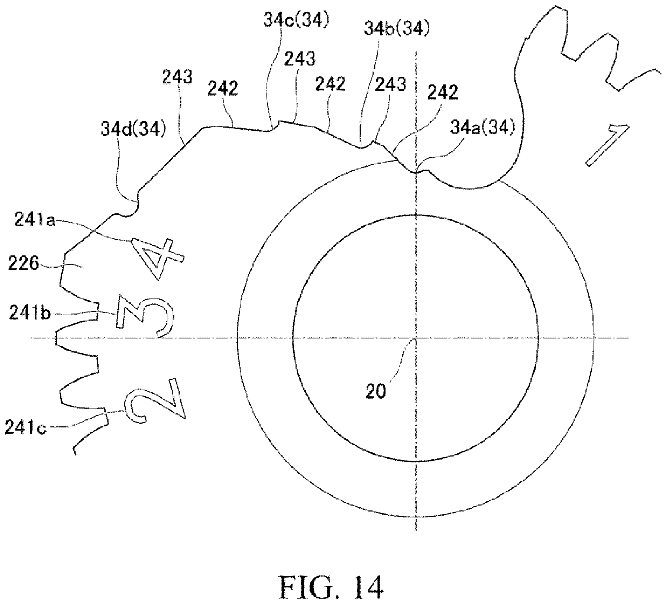

Fig. 9 is a plan view of a part of a speed control device 201 according to a second embodiment. Figs. 10 to 13 are plan views each showing a part of the speed control device 201. Fig. 14 is a plan view showing a part of a shift cam 226. For this embodiment, the same elements as those of the speed control device 1 according to the first embodiment (see Fig. 3) are denoted by the same reference numerals, and detailed description thereof will be omitted.

As shown in Fig. 9, the outer diameter D201 of the shift cam 226 is larger than the outer diameter D202 of the adjustment gears 27.

In the speed control device 201, a plurality of position indicators 241 are formed in the surface of the shift cam 226 of the centrifugal brake unit 213. The position indicators 241 indicate the rotational position of the shift cam 226. The position indicators 241 are located at different positions along the rotational direction of the shift cam 226. The position indicators 241 represent, for example, numbers. The position indicators 241 include position indicators 241a to 241d. In this embodiment, the position indicators 241a to 241d represent different numbers: "4", "3", "2", and "1". As shown in Fig. 10, the cover plate 228 has one window 240 formed therein.

Fig. 10 shows that the contact member 25 engages with the first engagement step 34a shown in Fig. 9. In this state, the window 240 is positioned to overlap the position indicator 241a. Therefore, the position indicator 241a is visible through the window 240. Fig. 11 shows that the adjustment gear 27 is operated to rotate the shift cam 226, such that the contact member 25 engages with the second engagement step 34b shown in Fig. 9. In this state, the position indicator 241b is visible through the window 240.

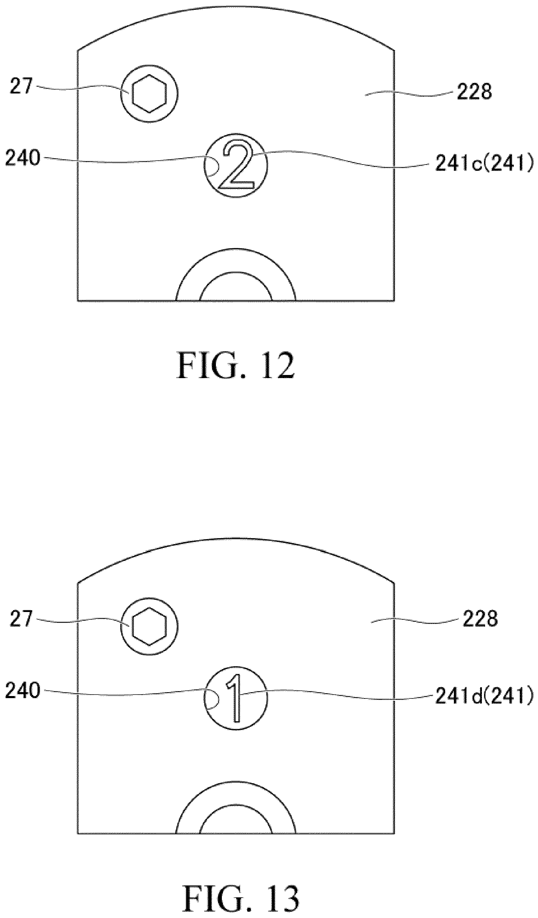

Fig. 12 shows that the adjustment gear 27 is operated to rotate the shift cam 226, such that the contact member 25 engages with the third engagement step 34c shown in Fig. 9. In this state, the position indicator 241c is visible through the window 240. Fig. 13 shows that the adjustment gear 27 is operated to rotate the shift cam 226, such that the contact member 25 engages with the fourth engagement step 34d shown in Fig. 9. In this state, the position indicator 241d is visible through the window 240.

As shown in Figs. 10 to 13, the visible position indicator 241 changes depending on the rotational position of the shift cam 226. Thus, the window 240 can indicate the rotational position of the shift cam 226.

As shown in Fig. 14, each of the portions of the outer edge of the shift cam 226 that are located between the adjacent ones of the engagement steps 34 has a first portion 242 and a second portion 243. The first portion 242 and the second portion 243 have, for example, a straight shape. As to the first portion 242 and the second portion 243 formed between the nth and the (n+1)th engagement steps 34 (n is an integer equal to or greater than one), the first portion 242 is continuous to the nth engagement step 34. The second portion 243 is continuous to the (n+1)th engagement step 34. Therefore, the second portion 243 is closer to the (n+1)th engagement step 34 than is the first portion 242. The second portion 243 has a larger inclination angle with respect to the radial direction of the shift cam 226 than the first portion 242.

### <Advantageous Effects Produced by Speed Control Device According to Embodiment>

In the speed control device 201, the outer diameter D201 of the shift cam 226 is larger than the outer diameter D202 of the adjustment gears 27, as shown in Fig. 9. Therefore, as with the speed control device 1 according to the first embodiment, the adjustment range of the braking force can be larger. This allows for a greater degree of freedom in setting the braking force. Thus, for example, the braking force can be set such that it is applied during traveling at a high speed.

In the speed control device 201, the cover plate 228 has the window 240 indicating the rotational position of the shift cam 226, making it easy to grasp the braking force of the centrifugal brake. Therefore, works such as setting of the rotation speed of the vehicle wheel 103 on which the centrifugal brake is activated can be easily performed.

In the speed control device 201, the window 240 can display the position indicators 241, making it easy to grasp the braking force of the centrifugal brake. The speed control device 201 can have a reduced number of window 240, which is advantageous in downsizing the device.

In the speed control device 201, as shown in Fig. 14, a first portion 242 and a second portion 243 are formed between the nth engagement step 34 (n is an integer equal to or greater than one) and the (n+1)th engagement step 34, and the second portion 243 has a larger inclination angle. Therefore, when the contact member 25 shifts from the nth engagement step 34 to the (n+1)th engagement step 34, the radial movement distance can be secured in the first portion 242 where the load from the spring 24 is small. Therefore, in the second portion 243, where the load from the spring 24 is larger, the contact member 25 can be shifted to the (n+1)th engagement step 34 with a relatively low force. Therefore, the contact member 25 can be easily shifted from the nth engagement step 34 to the (n+1)th engagement step 34.

In the above description of the embodiments of the invention, the features of the embodiments and the combinations thereof are mere examples. The embodiments can be modified by adding, omitting and replacing some or all of the features without departing from the scope of the invention. The present invention is not limited by the embodiments.

For example, in the above embodiments of the speed control devices 1 and 201, the elastic member was a spring 24 (coil spring), but the elastic member may be composed of any element that can bias the brake shoe outward. The shape of the windows is not limited particularly. For example, the windows may be shaped like a polygon such as a rectangle, or an ellipse. One or more (any plural number of) brake shoes may be provided. Further, in the above embodiments of the speed control devices 1 and 201, the planetary gear mechanism 80 has a two-stage configuration with a first-stage gear mechanism 110 and a second-stage gear mechanism 120, but this configuration is not limitative. A single-stage configuration is also acceptable.

Further, the above embodiments of the speed control devices 1 and 201 were described, by way of an example, to include the first wheel plate 60 and the second wheel plate 70 assembled together to constitute the wheel 50. Furthermore, the above embodiments of the speed control devices 1 and 201 were described, by way of an example, to be located in the inner housing space R constituted by the first housing space R1 of the first wheel plate 60 and the second housing space of the second wheel plate 70.

However, these cases are not limitative. For example, the vehicle wheel 103 may be constituted by a single wheel and the speed control device assembled together. An example of this case is described below as a variation.

### Variation

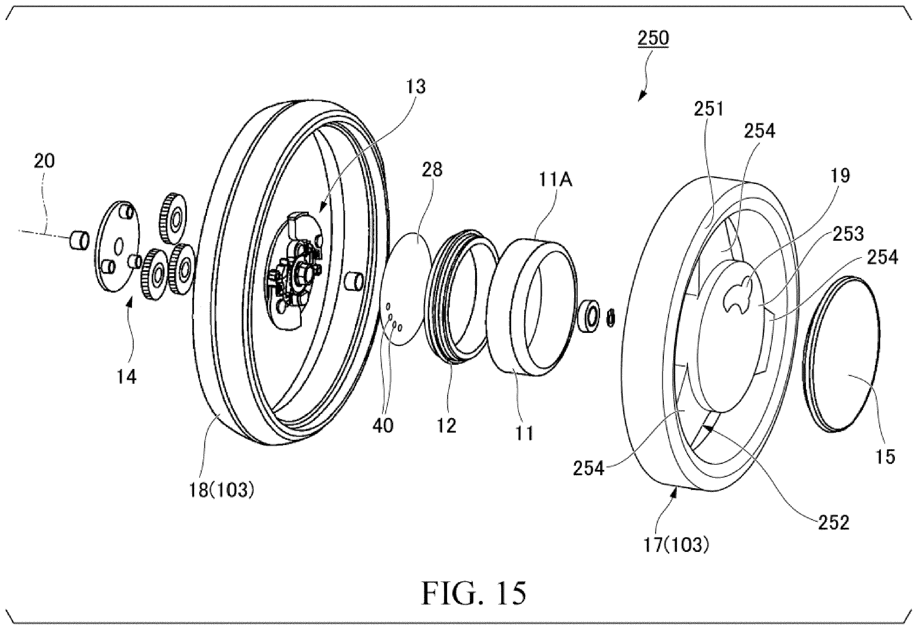

As shown in Figs. 15 to 17, the vehicle wheel 103 includes a wheel structure 17, which corresponds to the single wheel, and a tire 18. Fig. 15 does not show the axle 21. The wheel structure 17 includes a rim 251 and a disc 252. The rim 251 has a cylindrical shape. The tire 18 is attached to the rim 251. The disc 252 includes a mounting portion 253 and a plurality of spokes 254.

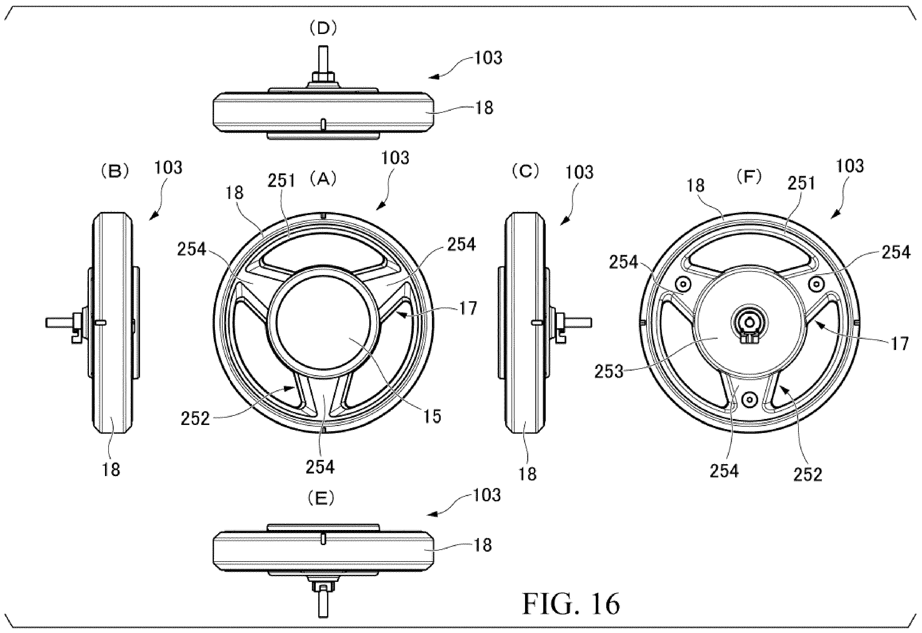

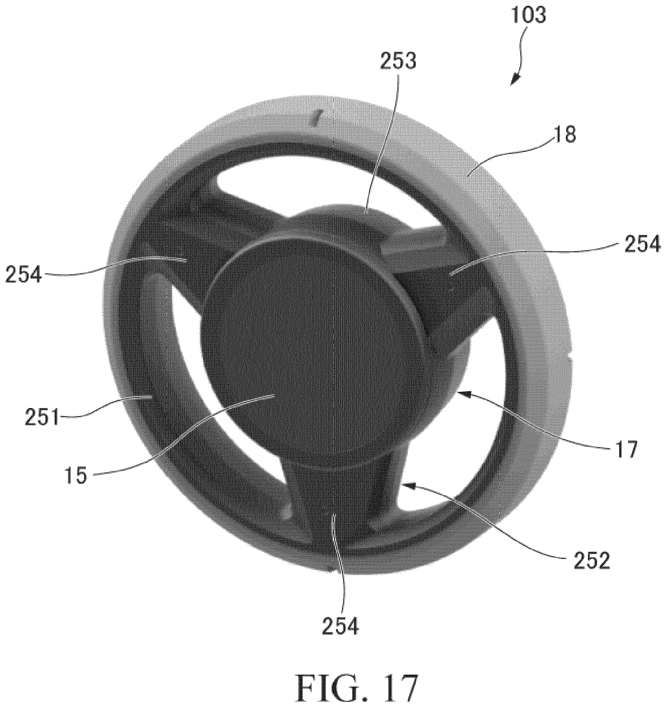

Fig. 16 is a six-sided view of the vehicle wheel 103. Part (A) of Fig. 16 is a front view of the vehicle wheel 103. Part (B) of Fig. 16 is a left side view of the vehicle wheel 103. Part (C) of Fig. 16 is a right side view of the vehicle wheel 103. Part (D) of Fig. 16 is a top view of the vehicle wheel 103. Part (E) of Fig. 16 is a bottom view of the vehicle wheel 103. Part (F) of Fig. 16 is a rear view of the vehicle wheel 103. Fig. 17 is a perspective view of the vehicle wheel 103.

The mounting portion 253 is mounted, for example, to a hub (not shown). The mounting portion 253 is located in the middle of the vehicle wheel 103, as viewed from the direction parallel to the rotation axis 20. The plurality of spokes 254 radiate from the mounting portion 253 to the rim 251. The spokes 254 connect between the mounting portion 253 and the rim 251. The number of spokes 254 provided is, for example, three or larger. As viewed from the direction parallel to the rotation axis 20, the width of each spoke 254 is gradually smaller toward the radially outward direction.

As shown in Fig. 15, the speed control device 250 in this case includes a brake drum 11, a housing 12, a centrifugal brake unit 13, a planetary gear mechanism 14, and a cap 15. The planetary gear mechanism 14 has a single-stage configuration. The brake drum 11 includes a tube 11A having a cylindrical shape. The brake drum 11 is fixed to the end of the axle (not shown). The housing 12 has a cylindrical shape. The housing 12 is attached to one end of brake drum 11. The cap 15 is removably attached to the outer surface of the wheel structure 17.

The centrifugal brake unit 13 is provided inside the tube 11A of the brake drum 11. The centrifugal brake unit 13 is a mechanism for generating a braking force of the centrifugal brake between the centrifugal brake unit 13 and the brake drum 11. The centrifugal brake unit 13 is rotatable around the rotation axis 20.

The wheel structure 17 is rotatable relative to the rotation axis 20. Thus, when the wheel structure 17 rotates, the rotational force is transmitted to the centrifugal brake unit 13 via the planetary gear mechanism 14. The wheel structure 17 has an opening 19 through which the window 40 of the cover plate 28 is visible.

The vehicle wheel 103 and the speed control device 250 configured in this manner can also produce the same effects as in the above embodiments.

### LIST OF REFERENCE NUMBERS

1, 201, 250 speed control device
11 brake drum
20 rotation axis
23 brake shoe
24 spring (elastic member)
25 contact member
26, 226 shift cam
27 adjustment gear
28, 228 cover plate
40, 40a to 40d, 240 window
241, 241a to 241d position indicator
103 vehicle wheel
D1, D201 outer diameter (diameter of shift cam)
D2, D202 outer diameter (diameter of adjustment gear)

## Claims

1. A speed control device (1, 201, 250) provided on a vehicle wheel (103) rotating around a rotation axis (20) so as to control rotation speed of the vehicle wheel (103), the speed control device (1, 201, 250) comprising:
a brake drum (11);
a brake shoe (23) for reducing the rotation speed of the vehicle wheel (103) by a braking force produced by contact with an inner circumference of the brake drum (11);
an elastic member (24) having one end and another end, the elastic member (24) being configured to bias the brake shoe (23) via the one end;
a contact member (25) provided on the other end of the elastic member (24);
a shift cam (26, 226) provided so as to be rotatable around the rotation axis (20) and configured to increase or reduce a force of the contact member (25) pressing the elastic member (24) in accordance with a rotational position of the shift cam (26, 226); and
an adjustment gear (27) operated by an external input to rotate the shift cam (26, 226), so as to set the rotational position of the shift cam (26, 226) to adjust the force pressing the elastic member (24),
wherein the shift cam (26, 226) has a larger diameter than the adjustment gear.

2. The speed control device (1, 201, 250) of claim 1, further comprising:
a cover plate (28, 228) covering at least the shift cam (26, 226),
wherein the cover plate (28, 228) has at least one window (40, 240) formed therein for indicating the rotational position of the shift cam (26, 226).

3. The speed control device (1, 201, 250) of claim 2,
wherein the at least one window (40, 240) comprises a plurality of windows (40a to 40d),
wherein the plurality of windows (40a to 40d) are located at different positions along a rotational direction of the shift cam (26, 226), and
wherein a number of windows (40a to 40d) overlapping the shift cam (26, 226) changes in accordance with the rotational position of the shift cam (26, 226).

4. The speed control device (1, 201, 250) of claim 2,
wherein the shift cam (26, 226) has a position indicator (241, 241a to 241d) for indicating the rotational position of the shift cam (26, 226), and
wherein the at least one window (40, 240) is formed such that the position indicator (241, 241a to 241d) is visible.

5. A vehicle (101) comprising:
the speed control device (1, 201, 250) of any one of claims 1 to 4; and
a vehicle wheel (103) having the speed control device (1, 201, 250) provided thereon.
